# EUROPÄISCHE PATENTSCHRIFT

(11) **EP 1 917 374 B1**
(45) Veröffentlichungstag und Bekanntmachung des Hinweises auf die Patenterteilung: **29.08.2012**
(21) Anmeldenummer: 06761798.5
(22) Anmeldetag: 13.07.2006
(51) Int. Cl.: C22C 23/02, C22B 4/06, C22B 7/00

(54) **MAGNESIUMLEGIERUNG**
MAGNESIUM ALLOY
ALLIAGE DE MAGNESIUM

(30) Priorität: 20.07.2005 DE 102005033835
(43) Veröffentlichungstag der Anmeldung: 07.05.2008
(73) Patentinhaber: Technische Universität Clausthal, 38678 Clausthal-Zellerfeld (DE); Helmholtz-Zentrum Geesthacht Zentrum für Material- und Küstenforschung GmbH, 21502 Geesthacht (DE)
(72) Erfinder: DITZE, André, 38678 Clausthal-Zellerfeld (DE); SCHARF, Christiane, 38667 Bad Harzburg (DE); BLAWERT, Carsten, 21481 Lauenburg (DE); KAINER, Karl, Ulrich, 21522 Hohnstorf (DE); MORALES GARZA, Emma, Deyanira, 86157 Augsburg (DE)
(74) Vertreter: Lins, Martina
(86) Internationale Anmeldenummer: PCT/DE2006/001212
(87) Internationale Veröffentlichungsnummer: WO 2007/009435

(56) Entgegenhaltungen:
- EP-A- 1 108 799
- JP-A- 9 157 782
- US-A- 6 146 584
- US-A1- 2005 129 564
- C. SCHARF, C. BLAWERT, A. DITZE: "Application of remelted post consumer scrap for structural magnesium parts" 2004, WILEY-VCH VERLAG GMBH & CO. KGAA, ED. K.U. KAINER , WEINHEIM , XP009072472 das ganze Dokument
- C. SCHARF, A. DITZE, A. SHURANKOV, E. MORALES, C. BLAWERT, W. DIETZEL, K.-U. KAINER: "Corrosion of AZ91 secondary magnesium alloy" ADVANCED ENGINEERING MATERIALS, Bd. 7, Nr. 12, 2005, XP009072476
- M.M. AVEDESIAN, H. BAKER: "Magnesium and magnesium alloys" 1999, ASM INTERNATIONAL , MATERIALS PARK, OH , XP002399298 Seite 293

## Beschreibung

Die Erfindung betrifft eine korrosionsbeständige Magnesiumlegierung, insbesondere eine aus Schrott erschmolzene Sekundärlegierung, deren Verwendung und ein Verfahren zu ihrer Herstellung.

Im Bereich der Magnesiummetallurgie gibt es bisher keine Sekundärlegierungen, wie bei anderen Metällen wie zum Beispiel in der Aluminiummetallurgie. Sekundärlegierungen werden aus Schrott erschmolzen. Sie werden dann erneut zu Produkten verarbeitet.

Es ist bekannt, dass Magnesiumlegierungen darin korrosionsbeständig sind, wenn die Gehalte an Kupfer, Nickel und Eisen sehr niedrig sind. In den weitverbreiteten Legierungen der Gruppen AZ (Magnesium mit Aluminium und Zink), AM (Magnesium mit Aluminium und Mangan), AS (Magnesium mit Aluminium und Silizium) und AJ (Magnesium mit Aluminium und Silizium) und AJ (Magnesium mit Aluminium und Strontium) sind die Toleranzgrenzen auf meist 250 ppm Kupfer, 10 ppm Nickel und 50 ppm Eisen festgelegt. Werden diese Gehalte überschritten, kommt es zu starker Korrosion vor allem durch Lochfraß, wie Bakke, P., Sannes, S., Albright, D.: Soc. Automotive Engineers, paper 1999-01-0926, (1999), pp. 1-10 und Kammer, C. (Hrsg.): Magnesiumtaschenbuch, Aluminium-Verlag Düsseldorf, 2000, 1. Auflage, ISBN 3-87017-264-9 angeben. Damit werden unbeschichtete Teile, wie Getriebegehäuse oder Kurbelgehäuse, aus den Magnesiumlegierungen unbrauchbar.

Auch beschichtete Teile, wie Handy-, Computer- oder Kettensägengehäuse, sind dem Korrosionsangriff dann ausgesetzt, wenn die Oberflächen auch nur geringe Beschädigungen aufweisen. Die Magnesiumlegierungen müssen daher aus reinen Vorstoffen hergestellt werden, die vor allem frei von Kupfer und Nickel sein müssen, da diese Elemente ohne großen Aufwand nicht aus Magnesium und seinen Legierungen zu entfernen sind.

Die Notwendigkeit der Energieeinsparüng und der Schonung der Umwelt erfördert ein Recycling der Produkte aus Magnesiumlegierungen. Das wird klar, wenn der Energieaufwand von 35 kWh/kg-Magnesium (ohne Berücksichtigung von Wirkungsgraden für die Energieumwandlung) bei der primären Herstellung von Magnesium dem Energiebedarf von 1 kWh/kg für das Recycling von Neuschrott gegenüberstellt wird.

Ein Recycling von Altschrott und insbesondere von Schredderfraktionen durch einfaches Umschmelzen mit günstigem Energiebedarf, nur unwesentlich höher als Neuschrott, ist bis jetzt nicht möglich. Die Schredderfraktionen enthalten immer Aluminiumschrott und damit auch Kupfer. Selbst sortenrein erfasste Demontageteile haben die gleichen Probleme, da aus den Beschichtungen Nickel und Kupfer in die Umschmelziegierungen gelangen. Wegen dieser Situation gibt es keine Sekundärlegierungen wie bei den Aluminiumleglerungen, die seit langem akzeptiert werden. Bekannte Magnesiumlegierungen mit erhöhten Gehalten an Aluminium und Zink sind in Tabelle 1 aufgeführt. Alle nachfolgend verwendeten %-Angaben bedeuten, wie auf dem Fachgebiet allgemein üblich, Massenprozente.

**Tabelle 1: Zusammensetzung von Magnesiumlegierungen mit erhöhten Aluminium- und Zinkgehalten in Massenprozent, ASM Handbook, ISBN 0-87170-657-1, 199.**

| Legierung | Al | Zn | Mn | max. zu | max. Ni | max. Fe | max. Si | max. andere |
|---|---|---|---|---|---|---|---|---|
| AZ92 | 8,3-9,7 | 1,6-2,4 | 0,9-0,35 | 0,35 | 0,01 | 0, 02 | 0,3 | 0,3 |
| AZ125 | 11-13 | 4,5-5,5 | | | | | | 0.3 |
| AM100 | 9,3-10,7 | 0,3 | 0,1-0,5 | 0,1 | 0,01 | 0,023 | 0,18 | 0,3 |
| AM90 (SIS144640) | 7-9,5 | 0,3-2 | 0,15 | 0,35 | 0,02 | 0,05 | 0.5 | |

Die Legierungen AZ92, AM100 und AM90 aus Tabelle 1 haben entweder hohe Aluminiumgehalte und niedrige Zinkgehalte oder umgekehrt. Die Korrosionseigenschaften dieser Legierungen sind bei erhöhten Gehalten an Kupfer,

Nickel und Eisen schlecht im Vergleich zu einer reinen Legierung, wie unten anhand der Figuren und Beispiele beschrieben. Die Legierung AZ125 hat zwar hohe Gehalte an Aluminium und Zink, die Summe der anderen Bestandteile beträgt jedoch nur 0,3 %. Eine Sekundärlegierung soll sich allerdings dadurch auszeichnen, dass höhere definierte Gehalte an Kupfer, Nickel und Eisen, die in Sekundärlegierungen immer vorhanden sind, hinsichtlich der Korrosionsbeständigkeit tolerierbar sind. Daher kann diese Legierung nicht als Sekundärlegierung angesehen werden.

In C. SCHARF, C. BLAWERT, A. DITZE: "Appiication of remelted post consumer scrap for structural magnesium parts" 2004, WILEY-VCH VERLAG GMBH & CO. KGAA, ED. K.U. KAINER, WEINHEIM, XP009072472 wurde die Eignung von wieder eingeschmolzenem Schrott zur Herstellung von Strukturteilen aus Magnesium untersucht. Hlerfür wurden Standardiegierungen des Typs AZ91D und AZ91B gezielt mit zusätzlichen Gehalten an Kupfer, Silizium und Nickel versehen, um eine aus Schrott gewonnene Zusammensetzung zu simulieren. Die Eignung für die Wiederverwendung wurde anhand von Korrosionstests untersucht und die grundsätzliche Möglichkeit einer Eignung festgestellt, Aus der EP 1 108 799 A2 (D2, HITACHI, LTD, 20. Juni 2001 (2001-06-20)) ist eine hochfeste Magnesium basierte Gussiegierung bekannt, die eine gute Gießfähigkeit und gute mechanische Eigenschaften besitzen soll. Diese hochfeste Magnesiumlegierung enthält 2 bis 20 Gew.-% Aluminium, 0,1 bis 10 Ges.-% Zink, 0,1 bis 15 Gew.-% Zinn und 0,05 bis 1,5 Gew.-% Mangan.

Die US2005/129564 A1 (D3, NAKAMURA KIYOMI ET AL; 16. Juni 2005 (2005-06-16) betrifft ebenfalls eine Magnesiumgusslegierung, die eine-gute Fluidität im Gießzustand und gute Kriecheigenschaften beim Guss besitzen soll, um damit im Spritzguss Formteil herstellen zu können: Diese Magnesiumlegierung besteht im Wesentlichen aus 10 bis 15 Gew.-% Aluminium, 0,5 bis 10 Ges.-% Zinn, 0,1 bis 3 Gew.-% Yttrium und 0,1 bis 1 Gew.% Mangan sowie ad 100 Gew.-% Magnesium bei unvermeldbaren Verunreinigungen.

C. SCHARF, A. DITZE, A. SHURANKOV, E. MORALES, C. BLAWERT, W. DIETZEL, K.-U. KAINER in "Corrosion of AZ91 secondary magnesium alloy" ADVANCED ENGINEERING MATERIALS, Bd. 7, Nr. 12, 2005, XP009072476) beschreiben das Korrosionsverhalten eine AZ91-Sekundärmagnesiumlegierung.

Der Erfindung lag die Aufgabe zugrunde, eine Magnesiumlegierung zu entwickeln, die trotz höherer definierter Gehalte an Kupfer und Nickel, vergleichbare oder bessere Korrosionseigenschaften wie eine hochreine Magnesiumprimärlegierung besitzt.

Eine solche Magnesiumlegierung kann aus Schrott oder unreinen Vorstoffen, die insbesondere Kupfer oder Nickel enthalten durch Einstellen der Bestandteile beim Erschmelzen erhalten und erneut für Strukturteile verwendet werden.

Die erfindungsgemäße Magnesiumlegierung enthält
10 bis 20 Mass% Aluminium,
2,5 bis 10 Mass% Zink,
0,1 bis 2 Mass% Mangan,
0,3 bis 2 Mass% Kupfer,
fakultativ ergänzt um wenigstens eines der Elemente Nickel, Kobalt, Eisen, Silizium, Zirkon und Beryllium bis zu einem Gesamtgehalt von 2 Mass%,
fakultativ ergänzt um bis zu je 2 Mass% wenigstens eines der Elemente Calcium und Strontium,
fakultativ ergänzt um bis zu je 2 Mass% wenigstens eines der Elemente aus der Gruppe: Elemente der Seltenen Erden, Yttrium, Scandium, CerMischmetall,
ad 100 % ergänzt mit Magnesium, wobei die Betaphase der Legierung eine Netzstruktur aufweist,

Alternativ enthält die Magnesiumlegierung
10 bis 20 Mass% Aluminium,
2,5 bis 10 Mass% Zink,
0,1 bis 2 Mass% Mangan,
0,001 bis 2 Mass% Nickel,
fakultativ ergänzt um wenigstens eines der Elemente Kupfer, Kobalt, Eisen, Silizium, Zirkon und Beryllium bis zu einem Gesamtgehalt von 2 Mass%,
fakultativ ergänzt um bis zu je 2 Mass% wenigstens eines der Elemente Calcium und Strontium,
fakultativ ergänzt um bis zu je 2 Mass% wenigstens eines der Elemente aus der Gruppe: Elemente der Seltenen Erden, Yttrium, Scandium, CerMischmetall,
ad 100 % ergänzt mit Magnesium, wobei die Betaphase der Legierung eine Netzstruktur aufweist.

In den meisten Fällen wird in der Legierung zusätzlich wenigstens eines der Elemente Kupfer, Nickel, Kobalt, Eisen, Silizium, Zirkon und Beryllium mit einem Gesamtgehalt bis zu 2 % enthalten sein (Kupfer zusätzlich zu Nickel oder Nickel zusätzlich zu Kupfer). Von einem "Enthaltensein" des jeweiligen Elements wird in der Regel dann zu sprechen sein, wenn es in einer Mindestmenge von ca. 0,001 Mass% vorhanden ist,

Überraschenderweise wurde gefunden, dass trotz vielfach höherer Gehälte an Kupfer, Nickel, Eisen und Silizium in der neuen Magnesiumsekundärlegierung im

Vergleich zu den Grenzgehalten der Legierungen, die bisher für Strukturteile eingesetzt werden, das Korrosionsverhalten genauso gut ist, wie das der hochreinen Legierungen.

Vorzugsweise besteht die verunreinigungstolerante Magnesiumlegierung aus 11 bis 18 Mass% Aluminium, vorzugsweise 12 bis 16 Mass% Aluminium, 3 bis 8 Mass% Zink, vorzugsweise 3 bis 5 Mass% Zink, 0,3 bis 1,5 Mass% Mangan, vorzugsweise 0,5 bis 1 Mass% Mangan, 0,3 bis 2 Mass% Kupfer, vorzugsweise 0,45 bis 0,8 Mass% Kupfer, sowie gegebenenfalls wenigstens eines der Elemente Nickel, Kobalt, Eisen, Silizium, Zirkon und Beryllium in einem Gesamtgehalt bis 1,5 %, vorzugweise mit einem Gesamtgehalt bis 1 % und Rest Magnesium.

Gegenstand der Erfindung ist somit eine Magnesiumlegierung, die die angegebenen Gehalte an Aluminium, Zink und Mangan enthält sowie zusätzlich 0,3 % bis 2 % Kupfer und/oder die Elemente Nickel, Kobalt, Eisen, Silizium, Zirkon und Beryllium in einem Gesamtgehalt bis 2 %, vorzugsweise bis 1,5 %, weiter vorzugsweise bis 1 %, wobei die Elemente Kupfer, Nickel, Kobalt, Eisen und Silizium im Allgemeinen durch verunreinigte Legierungsausgangsstoffe bzw. Schrott in die Legierung eingebracht werden.

Zusätzliche geringe Gehalte anderer Elemente, die der Fachmann nicht als Legierungsbestandteile qualifizieren würde, können vorhanden sein. Derartige Verunreinigungen bewegen sich in Größenordnungen bis maximal 0,1 % undinsbesondere maximal 0,01 %. Verunreinigungen in dieser Größenordnung können ihrerseits durch die Verwendung unreiner Vorstoffe oder Schrott eingeschleppt worden sein.

Der Nickelgehalt der Magnesiumlegierung liegt vorzugsweise bei wenigstens 0,003 %. Diese Nickelgehalte können durch die höheren Aluminium-, Zink- und Mangangehalte in der erfindungsgemäßen Legierung in dem Sinne ausgeglichen werden, dass trotz des höheren Nickelgehalts keine erhöhten Korrosionseigenschaften festgestellt werden konnten.

Weiter vorzugsweise enthält die Magnesiumlegierung wenigstens 0,4 % Kupfer.

In bevorzugter Weiterbildung der Erfindung enthält die Magnesiumlegierung weiter bis zu je 2 % wenigstens eines der Elemente Kalzium und Strontium und in weiterer bevorzugter Ausführungsform bis zu je 2 % wenigstens eines der Elemente aus der Gruppe Elemente der Seltenen Erden, Yttrium und Scandium, Gemäß einer weiteren Ausführungsform der Erfindung enthält die Magnesiumlegierung vorzugsweise bis zu 2 % und weiter vorzugsweise wenigstens 0,1 % Cer-Mischmetall. Cer-Mischmetall ist kommerziell erhältlich und dem Fachmann wohl bekannt. Eine typische Zusammensetzung für Cer-Mischmetall wäre beispielsweise: Seltene Erden mindestens 99,00 %, Cer maximal 57,12 %, Lanthan maximal 36,19 %, Praseodym maximal 4,33 %, Neodym maximal 2,36 %, Eisen maximal 0,54 %, Magnesium maximal 0,14 %, Silizium maximal 0,051 %, Schwefel maximal 0,01 %, Phosphor maximal 0,01 % (aus Handbook of Extractive Metallurgy, vol. III, 1997)

Es wurde überraschenderweise festgestellt, dass durch Zusatz von Strontium, Calcium, Seltenen Erden, Yttrium und Scandium einzeln oder im Gemisch in Gehalten bis zu 2 % die Korrosionseigenschaften noch weiter verbessert wurden. Die Korrosionsraten dieser Legierungen, ermittelt nach dem Salzsprühtest nach DIN 50021, sind weiter unten in Tabelle 4, die Zusammensetzungen in Tabelle 5 angegeben.

Die erhaltene Magnesiumlegierung besitzt vorzugsweise eine Korrosionsrate unter 1,2 mm/Jahr, gemessen mittels eines Salzsprühtests nach DIN 50021 wie unter den Beispielen genauer angegeben.

Die Aufgabe der Erfindung wird auch dadurch gelöst, dass es sich bei der Magnesiumlegierung um eine Sekundärlegierung handelt, die durch Erschmelzen von Schrott oder unreinen Vorstoffen die Kupfer und/oder Nickel enthalten, erhalten wurde.

Eine solche Magnesiumsekundärlegierung ist kostengünstig herzustellen und besonders geeignet für die Herstellung von Strukturteilen.

Eine solche Magnesiumlegierung ist ebenfalls besonders geeignet für die Herstellung und den Einsatz des Korrosionsschutzanoden im Süßwasserbereich.

Die Erfindung umfasst auch ein Verfahren zur Herstellung einer Magnesiumlegierung aus mit Kupfer und/oder Nickel verunreinigten Vorstoffen, insbesondere aus Magnesiumschrott, welches sich dadurch auszeichnet, dass der Schrott oder die unreinen Vorstoffe erschmolzen werden und dass die Legierung auf einen Gehalt an Bestandteilen eingestellt wird, der einer erfindungsgemäßen Magnesiumlegierung wie oben beschrieben entspricht.

Die vergleichenden Korrosionsuntersuchungen erfolgten durch Immersion in 3,5 und 5 %iger Natriumchloridlösung und nach dem Salzsprühtest nach DIN 50021. In den Immersionsmessungen wurde die Korrosionsrate durch Messung der entwickelten Wasserstoffmenge und/oder durch Titration mit Salzsäure ermittelt. Im Salzsprühtest wird der Massenverlust bestimmt. In der Tabelle 2 sind die Korrosionsraten einer neuen Sekundärlegierung, einer reinen Legierung und einer Vergleichslegierung mit ähnlichen Gehalten an Kupfer und Nickel gegenüberstellt. Die Zusammensetzung der in Tabelle 2 aufgeführten Legierungen ist in Tabelle 3 angegeben.

**Tabelle 2: Korrosionsraten in mm/Jahr der Magnesiumlegierungen**

| | Immersion pH = 6 mm/Jahr | Salzsprühtest mm/Jahr |
|---|---|---|
| Neue Sekundärlegierung | 6,57 | 1,00 |
| Reine Legierung | 5,73 | 1,07 |
| Vergleichslegierung | 35,27 | 23,79 |

**Tabelle 3: Zusammensetzung der in Tabelle 2 genannten Legierungen in Massenprozent**

| | Al | Zn | Mn | Cu | Ni | Fe | Si |
|---|---|---|---|---|---|---|---|
| Neue Sekundärlegierung | 11,7 | 3,04 | 0,48 | 0,47 | 0,0032 | 0,0087 | 0,39 |
| Reine Legierung | 8,65 | 0,67 | 0,20 | 0,0081 | 0,00061 | 0,0022 | 0,054 |
| Vergleichslegierung | 8,17 | 2,84 | 0,21 | 0,0085 | 0,0026 | 0,023 | 0,18 |

Die Bedingungen für den Immersionstest waren folgende:
3,5 Gew.-% wässrige NaCl-Lösung
pH-Wert = 6 (konstant)
Volumen der Lösung: 1,9 I
Probengröße: Durchmesser 25 mm, Dicke 4 mm
Probenbehandlung: geschliffen mit Körnung 1200, gespült mit Wasser und Ethanol.

Nach mindestens 100 Stunden Immersion ergibt sich für die erfindungsgemäßen Legierungen eine Korrosionsrate unter 10 mm/Jahr und nach mindestens 400 Stunden eine Korrosionsrate unter 20 mm/Jahr. Der Salzsprühtest nach DIN 50021 ergab, dass die erfindungsgemäßen Magnesiumlegierungen Korrosionsraten unter 1,2 mm/Jahr zeigen und damit Magnesiumreinstlegierungen wenigstens vergleichbar sind.

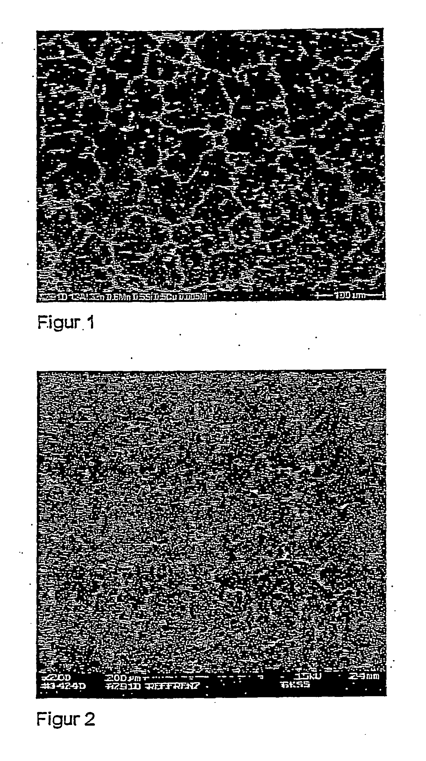

Die Mikrostruktur der neuen Sekundärlegierung ist durch eine sehr geringe Korngröße und eine Veränderung der Betaphase Mg₁₇Al₁₂ bestimmt. Die Betaphase bildet dann eine Netzstruktur nach Figur 1, die den Korrosionsangriff, der durch die Lokalelementbildner Kupfer, Nickel, Kobalt und Eisen hervorgerufen wird, verlangsamt. Die Mikrostruktur der reinen Legierung AZ91 weist dagegen die Netzstruktur der Betaphase nicht auf, Figur 2. Die neue Legierung ist damit tolerant gegenüber hohen Gehalten an Kupfer, Nickel, Kobalt und Eisen.

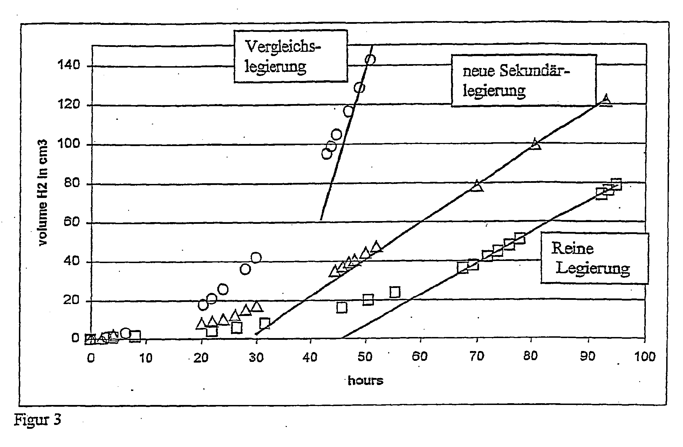

In der Figur 3 und Tabelle 2 ist eine Legierung mit angegeben, die zeigt, wie eine verunreinigte Legierung mit nur wenig erhöhtem Nickel- und Eisengehalt korrodiert, wenn die Zusammensetzung nicht der einer erfindungsgemäßen Sekundärlegierung entspricht. Diese Legierung hat die Bezeichnung "Vergleichslegierung".

**Tabelle 4: Korrosionsraten in mm/Jahr der Magnesiumlegierungen mit Strontium, Calcium und Seltenen Erden**

| Magnesiumsekundärlegierung | Salzsprühtest mm/Jahr |
|---|---|
| Mit Strontium | 0,67 |
| Mit Calcium | 0,25 |
| Mit Seltenen Erden | 0,33 |

**Tabelle 5: Zusammensetzung der in Tabelle 4 genannten Legierungen in Massenprozent**

| Magnesiumsekundärlegierung | Al | Zn | Mn | Cu | Ni | Fe | Si |
|---|---|---|---|---|---|---|---|
| Mit 0,0034 % Strontium | 10,97 | 3,28 | 0,61 | 0,47 | 0,0037 | 0,0043 | 0,12 |
| Mit 0,30 % Calcium | 9,84 | 2,38 | 0,40 | 0,27 | 0,0025 | 0,0014 | 0,10 |
| Mit Seltenen Erden*) | 10,47 | 3,00 | 0,60 | 0,47 | 0,0025 | 0,0047 | 0,15 |

| | | | | | | | |
|---|---|---|---|---|---|---|---|
| *) 0,16 % Ce, 0,13 % La, 0,028 % Pr, 0,039 Nd | | | | | | | |

Die erfindungsgemäßen Magnesiumsekundärlegierungen sind in hervorragender Weise geeignet für den Einsatz als Strukturteile im Bereich der Gusslegierungen und der Semi-Solid-Gießverfahren z.B. New Rheo Casting. Sie sind ebenfalls für den Einsatz als Korrosionsschutzanoden im Süßwasserbereich geeignet.

Die Erfindung verbessert den Stand der Technik in folgenden Punkten:
- es können Sekundärlegierungen für Strukturteile auf dem Markt eingeführt werden, die kostengünstiger als die hochreinen Magnesiumlegierungen sind und die gleichen Korrosionsraten haben.
- die neuen Legierungen ermöglichen das kosten- und energiegünstige Recycling von Altschrott mit dem Ziel, erneut Strukturteile zu erzeugen.
- es können für die neuen Legierungen unreinere Vorstoffe, die Kupfer und Nickel enthalten, eingesetzt werden. Damit entfallen Raffinationsschritte bei der Magnesiumoxid- und Magnesiumchloridherstellung.
- ein Downcycling, wie der Einsatz von Schredder im Aluminiumbereich oder als Entschwefelungsmittel in der Stahlindustrie wird vermieden.

Die Erfindung wird durch Ausführungsbeispiele näher erläutert.

### Beispiel 1

Es wurde eine Magnesiumlegierung mit der Zusammensetzung 11,7 % Al, 3,04 % Zn, 0,48 % Mn, 0,47 % Cu, 0,0032 % Ni, 0,0087 % Fe und 0,39 % Si in der Legierung erschmolzen. Die Herstellung der Legierung erfolgte bei 760 °C. Die Schmelze wurde in eine auf 200 °C vorgewärmte Kupferkokille gegossen. Auf die gleiche Weise wurde eine hochreine Referenzlegierung der Zusammensetzung 8,65 % Al, 0,67 % Zn, 0,20 % Mn, 0,0081 % Cu, 0,00061 % Ni, 0,0022 % Fe und 0,054 % Si hergestellt. Die Referenzlegierung entspricht einer hochreinen Magnesiumlegierung AZ 91 mit besonders guter Korrosionsbeständigkeit.

Aus dem Legierungsstab wurden Scheiben mit einem Durchmesser von 25 mm und einer Dicke von 4 mm herausgeschnitten und der Korrosionsprüfung unterzogen. Die Korrosionsprüfung erfolgte durch Eintauchen der Scheiben in eine 3,5%ige wässrige NaCl-Lösung bei konstantem pH-Wert. Gemäß der Reaktion

Mg + 2H₂O = Mg(OH)₂ + H₂

entsteht für ein Atom Magnesium ein Mol Wasserstoff. Dadurch kann die Korrosionsrate aus dem entstehenden Wasserstoffvolumen ermittelt werden. Das Korrosionsverhalten der neuen Sekundärlegierung ist in Figur 3 der Referenzlegierung sowie einer mit Ni und Fe verunreinigten Vergleichslegierung der Zusammensetzung 8,17 % Al, 2,84 % Zn, 0,21 % Mn, 0,0085 % Cu, 0,0026 % Ni, 0,023 % Fe und 0,18 % Si gegenübergestellt. Figur 3 zeigt die Wasserstoffentwicklung in 3,5 % NaCl-Lösung bei konstantem pH = 6. Nach unterschiedlichem Anfangsverlauf der Wasserstoffentwicklung in Figur 3, ist das Korrosionsverhalten durch die linearen Bereiche in Figur 3 gekennzeichnet. Die

daraus berechneten Korrosionsraten sind in Tabelle 2 angegeben. In Tabelle 2 sind ebenfalls die Korrosionsraten, ermittelt aus dem Salzsprühtest nach DIN 50021, eingetragen.

Aus Tabelle 2 ist ersichtlich, dass die neue Sekundärlegierung die gleichen Korrosionsraten wie die hochreine Legierung hat.

### Beispiel 2 (nicht erfindungsgemäß, Vergleichsbeispiel)

Es wurde eine Magnesiurnsekundätlegierung mit der Zusammensetzung 9,84 % Aluminium, 2,38 % Zink, 0,40 % Mangan, 0,27 % Kupfer, 0,0025 % Nickel, 0,0014 % eisen, 0,10 %Silizium und 0,30 % Calcium, Rest Magnesium erschmolzen. Die Korrosionsrate, im Salzsprühtest nach DIN 50021 ermittelt, betrug 0,25 mm/Jahr. Die Korrosionsrate liegt damit deutlich unter der der hochreinen Legierung AZ 91 von 1,07 mm/Jahr.

### Beispiel 3

Es wurde eine Magnesiumsekundärlegierung mit der Zusammensetzung 10,97 % Aluminium, 3,28 % Zink, 0,61 % Mangan, 0,47 % Kupfer, 0,0037 % Nickel, 0,0043 % Eisen, 0,12 % Silizium und 0,0034 % Strontium, Rest Magnesium erschmolzen. Die Korrosionsrate, im Salzsprühtest nach DIN 50021 ermittelt, betrug 0,67 mm/Jahr. Die Korrosionsrate liegt damit deutlich unter der der hochreinen Legierung AZ 91 von 1,07 mm/Jahr.

### Beispiel 4

Es wurde eine Magnesiumsekundärlegierung unter Zusatz von Cermischmetall mit der Zusammensetzung 10,47 % Aluminium, 3,00 % Zink, 0,60 % Mangan, 0,47 % Kupfer, 0,0025 % Nickel, 0,0047 % Eisen, 0,15 % Silizium und 0,16 % Cer, 0,13 % Lanthan, 0,028 % Praseodym und 0,039 % Neodym, Rest Magnesium erschmolzen. Die Korrosionsrate, im Salzsprühtest nach DIN 50021 ermittelt, betrug 0,33 mm/Jahr.

Die Korrosionsrate liegt damit deutlich unter der der hochreinen Legierung AZ 91 von 1,07 mm/Jahr.

## Patentansprüche

1. Magnesiumlegierung enthaltend
10 bis 20 Mass% Aluminium,
2,5 bis 10 Mass% Zink,
0,1 bis 2 Mass% Mangan,
0,3 bis 2 Mass% Kupfer,
fakultativ ergänzt um wenigstens eines der Elemente Nickel, Kobalt, Eisen, Silizium, Zirkon und Beryllium bis zu einem Gesamtgehalt von 2 Mass%,
fakultativ ergänzt um bis zu je 2 Mass% wenigstens eines der Elemente Calcium und Strontium,
fakultativ ergänzt um bis zu je 2 Mass% wenigstens eines der Elemente aus der Gruppe: Elemente der seltenen Erden, insbesondere Yttrium, Scandium, Cer-Mischmetall,
ad 100 % ergänzt mit Magnesium, wobei die Betaphase der Legierung eine Netzstruktur aufweist.

2. Magnesiumlegierung enthaltend
10 bis 20 Mass% Aluminium,
2,5 bis 10 Mass% Zink,
0,1 bis 2 Mass% Mangan,
0,001 bis 2 Mass% Nickel,
fakultativ ergänzt um wenigstens eines der Elemente Kupfer, Kobalt, Eisen, Silizium, Zirkon und Beryllium bis zu einem Gesamtgehalt von 2 Mass%,
fakultativ ergänzt um bis zu je 2 Mass% wenigstens eines der Elemente Calcium und Strontium,
fakultativ ergänzt um bis zu je 2 Mass% wenigstens eines der Elemente aus der Gruppe: Elemente der seltenen Erden, insbesondere Yttrium, Scandium, Cer-Mischmetall,
ad 100 % ergänzt mit Magnesium, wobei die Betaphase der Legierung eine Netzstruktur aufweist.

3. Magnesiumlegierung nach Anspruch 1, bestehend aus 11 bis 18 % Aluminium, vorzugsweise 12 % bis 16 % Aluminium, 3 % bis 8 % Zink, vorzugsweise 3 % bis 5 % Zink, 0,3 % bis 1,5 % Mangan, vorzugsweise 0,5 % bis 1 % Mangan, 0,3 % bis 2 % Kupfer, vorzugsweise 0,45 % bis 0,8 % Kupfer, sowie gegebenenfalls wenigstens einem der Elemente Nickel, Kobalt, Eisen, Silizium, Zirkon und Beryllium in einem Gesamtgehalt bis 1,5 %, vorzugsweise mit einem Gesamtgehalt bis 1 % und Rest Magnesium (jeweils Mass%).

4. Magnesiumlegierung nach einen der Ansprüche 1 bis 3, **dadurch gekennzeichnet, dass** der Nickelgehalt wenigstens 0,003 % beträgt.

5. Magnesiumlegierung nach einem der Ansprüche 1 bis 4, **dadurch gekennzeichnet, dass** der Kupfergehalt wenigstens 0,4 % beträgt.

6. Magnesiumlegierung nach einem der Ansprüche 1 bis 5, **dadurch gekennzeichnet, dass** sie eine Korrosionsrate unter 1,2 mm/Jahr besitzt, gemessen mittels eines Salzsprühtestes nach DIN 50021.

7. Magnesiumlegierung nach einem der Ansprüche 1 bis 6, **dadurch gekennzeichnet, dass** es sich um eine Sekundärlegierung handelt, die durch Erschmelzen von Schrott oder unreinen Vorstoffen, die Kupfer und/oder Nickel enthalten, erhalten wurde.

8. Verwendung der Magnesiumlegierung nach einem der Ansprüche 1 bis 7 zur Herstellung von Strukturteilen oder Korrosionsschutzanoden.

9. Verfahren zur Herstellung einer Magnesiumlegierung aus mit Kupfer und/oder Nickel verunreinigten Vorstoffen, insbesondere aus Magnesiumschrott, **dadurch gekennzeichnet, dass** der Schrott oder die unreinen Vorstoffe erschmolzen werden und dass die Legierung auf einen Gehalt an Bestandteilen eingestellt wird, der einer Magnesiumlegierung nach einem der Ansprüche 1 bis 7 entspricht.

## Claims

1. Magnesium alloy containing
from 10 to 20% by mass of aluminium,
from 2.5 to 10% by mass of zinc,
from 0.1 to 2% by mass of manganese,
from 0.3 to 2% by mass of copper,
and optionally at least one of the elements nickel, cobalt, iron, silicon, zirconium and beryllium up to a total content of 2% by mass,
and optionally up to 2% by mass each of at least one of the elements calcium and strontium,
and optionally up to 2% by mass each of at least one of the elements from the group consisting of: elements of the rare earths, in particular yttrium, scandium, cerium mischmetal,
balance to 100% magnesium, where the beta phase of the alloy has a network structure.

2. Magnesium alloy containing
from 10 to 20% by mass of aluminium,
from 2.5 to 10% by mass of zinc,
from 0.1 to 2% by mass of manganese,
from 0.001 to 2% by mass of nickel,
and optionally at least one of the elements copper, cobalt, iron, silicon, zirconium and beryllium up to a total content of 2% by mass,
and optionally up to 2% by mass each of at least one of the elements calcium and strontium,
and optionally up to 2% by mass each of at least one of the elements from the group consisting of: elements of the rare earths, in particular yttrium, scandium, cerium mischmetal,
balance to 100% magnesium, where the beta phase of the alloy has a network structure.

3. Magnesium alloy according to Claim 1 consisting of from 11 to 18% of aluminium, preferably from 12% to 16% of aluminium, from 3% to 8% of zinc, preferably from 3% to 5% of zinc, from 0.3% to 1.5% of manganese, preferably from 0.5% to 1% of manganese, from 0.3% to 2% of copper, preferably from 0.45% to 0.8% of copper, and optionally at least one of the elements nickel, cobalt, iron, silicon, zirconium and beryllium in a total content of up to 1.5%, preferably having a total content of up to 1%, and magnesium as balance (in each case % by mass).

4. Magnesium alloy according to any of Claims 1 to 3, **characterized in that** the nickel content is at least 0.003%.

5. Magnesium alloy according to any of Claims 1 to 4, **characterized in that** the copper content is at least 0.4%.

6. Magnesium alloy according to any of Claims 1 to 5, **characterized in that** it has a corrosion rate of less than 1.2 mm/year, measured by means of a salt spray test in accordance with DIN 50021.

7. Magnesium alloy according to any of Claims 1 to 6, **characterized in that** it is a secondary alloy obtained by melting of scrap or impure intermediates containing copper and/or nickel.

8. Use of the magnesium alloy according to any of Claims 1 to 7 for producing structural parts or corrosion protection anodes.

9. Process for producing a magnesium alloy from intermediates contaminated with- copper and/or nickel, in particular from magnesium scrap, **characterized in that** the scrap or the impure intermediates are melted and **in that** the alloy is adjusted to a content of constituents corresponding to a magnesium alloy according to any of Claims 1 to 7.

## Revendications

1. Alliage de magnésium contenant
10 à 20 % en masse d'aluminium,
2,5 à 10 % en masse de zinc,
0,1 à 2 % en masse de manganèse,
0,3 à 2 % en masse de cuivre,
facultativement complété par au moins l'un des éléments nickel, cobalt, fer, silicium, zirconium et béryllium jusqu'à une teneur totale de 2 % en masse,
facultativement complété par jusqu'à chaque fois 2 % en masse d'au moins l'un des éléments calcium et strontium,
facultativement complété par jusqu'à chaque fois 2 % en masse d'au moins l'un des éléments choisis dans le groupe : éléments des terres rares, en particulier yttrium, scandium, cérium-mischmétal,
complété à 100 % avec du magnésium, la phase bêta de l'alliage présentant une structure réticulaire.

2. Alliage de magnésium contenant
10 à 20 % en masse d'aluminium,
2,5 à 10 % en masse de zinc,
0,1 à 2 % en masse de manganèse,
0,001 à 2 % en masse de nickel,
facultativement complété par au moins l'un des éléments cuivre, cobalt, fer, silicium, zirconium et béryllium jusqu'à une teneur totale de 2 % en masse,
facultativement complété par jusqu'à chaque fois 2 % en masse d'au moins l'un des éléments calcium et strontium,
facultativement complété par jusqu'à chaque fois 2 % en masse d'au moins l'un des éléments choisis dans le group : éléments des terres rares, en particulier yttrium, scandium, cérium-mischmétal,
complété à 100 % avec du magnésium, la phase bêta de l'alliage présentant une structure réticulaire.

3. Alliage de magnésium selon la revendication 1, constitué de 11 à 18 % d'aluminium, de préférence 12 % à 16 % d'aluminium, 3 % à 8 % de zinc, de préférence 3 % à 5 % de zinc, 0,3 % à 1,5 % de manganèse, de préférence 0,5 % à 1 % de manganèse, 0,3 à 2 % de cuivre, de préférence 0,45 % à 0,8 % de cuivre, ainsi qu'éventuellement d'au moins l'un des éléments nickel, cobalt, fer, silicium, zirconium et béryllium en une teneur totale de jusqu'à 1,5 %, de préférence en une teneur totale de jusqu'à 1 %, et pour le reste de magnésium (chaque fois % en masse).

4. Alliage de magnésium selon l'une quelconque des revendications 1 à 3, **caractérisé en ce que** la teneur en nickel est d'au moins 0,003 %.

5. Alliage de magnésium selon l'une quelconque des revendications 1 à 4, **caractérisé en ce que** la teneur en cuivre est d'au moins 0,4 %.

6. Alliage de magnésium selon l'une quelconque des revendications 1 à 5, **caractérisé en ce qu'**il a une vitesse de corrosion inférieure à 1,2 mm/an, mesurée au moyen d'un essai au brouillard salin selon DIN 50021.

7. Alliage de magnésium selon l'une quelconque des revendications 1 à 6, **caractérisé en ce qu'**il s'agit d'un alliage secondaire, qui a été obtenu par fusion de déchets ou de pré-matériaux impurs qui contiennent du cuivre et/ou du nickel.

8. Utilisation de l'alliage de magnésium selon l'une quelconque des revendications 1 à 7, pour la fabrication d'éléments structuraux ou d'anodes anticorrosion.

9. Procédé pour la production d'un alliage de magnésium à partir de pré-matériaux contaminés avec du cuivre ou du nickel, en particulier à partir de déchets de magnésium, **caractérisé en ce qu'**on fait fondre les déchets ou les pré-matériaux impurs et **en ce qu'**on ajuste l'alliage à une teneur en composants qui correspond à un alliage de magnésium selon l'une quelconque des revendications 1 à 7.
